# EUROPEAN PATENT SPECIFICATION

(11) **EP 3 948 058 B1**
(45) Date of publication and mention of the grant of the patent: **24.07.2024**
(21) Application number: 20714480.9
(22) Date of filing: 27.03.2020
(51) Int. Cl.: F17C 7/02, F17C 13/12

(54) **APPARATUS FOR PUMPING FLUIDS**
VORRICHTUNG ZUM PUMPEN VON FLÜSSIGKEITEN
APPAREIL DE POMPAGE DE FLUIDES

(30) Priority: 28.03.2019 EP 19315019
(43) Date of publication of application: 09.02.2022
(73) Proprietor: Cryostar SAS, 68220 Hesingue (FR)
(72) Inventor: BONNEFOUS, Patrice, 12700 Capdenac-Gare (FR)
(74) Representative: Reuß, Stephanie
(86) International application number: PCT/EP2020/025147
(87) International publication number: WO 2020/192974

(56) References cited:
- WO-A1-2018/227289
- DE-A1- 102005 054 894
- GB-A- 2 084 760
- US-A- 5 921 266
- US-A- 6 148 848

## Description

This invention relates to the pumping of fluids.

In particular, it relates to a safety apparatus for pumping flammable fluids like refrigerated liquefied gases.

### --BACKGROUND OF THE INVENTION--

Refrigerated liquefied gases like liquefied oxygen, liquefied natural gas, liquefied hydrogen are used in a variety of applications. Refrigerated liquefied gases are usually stored in an insulated storage tank under a pressure of a few bars and at cryogenic temperatures. Refrigerated liquefied gases are usually delivered to an usage point to be used at a higher pressure, ranging from a few tens to a few hundreds of bars. Therefore the pressure of the refrigerated liquefied gas must be increased between the storage tank and the usage point.

The pressure increase from the storage pressure to the the usage point pressure is generally realized with a pump. Such pumps can be of reciprocal type or of a rotating type.

Both reciprocal pumps and centrifugal pumps are well known and will not be further described here.

Therefore it appears necessary to have a suitable refrigerated liquefied gases pumping apparatus. Such apparatus for pumping fluids like refrigerated liquefied gases as shown in US patent 5,537,828 are well-known and they usually comprises:
- an insulated tank for storing the fluid;
- a pump;
- a line connecting an outlet of the storage tank to a pump;
- another line connecting an outlet of a pump to an usage point;
- an isolation valve located on the line between an outlet of the storage tank and the pump.

Document US 6 148 848 A disclose a multicannular fluid delivery system armed with pressure sensitive alarm modalities consisting of inner hosing circumscribed by outer housing with a first manifold ring characterized by the presence of a center through hole affixed to a first end of the inner housing and a first end of the outer hosing such that gas under pressure from the situs of a pump via piping can ultimately enter the manifold ring through an extrusion protruding from a circumferential side of the ring.

Refrigerated liquefied gases like liquefied oxygen, liquefied natural gas, liquefied hydrogen are also extremely flammable and/or explosive.

### --SUMMARY OF THE INVENTION--

The present invention provides a pumping apparatus for pumping fluids which comprises a pump for pumping the fluid having a longitudinal axis, a pneumatically actuated valve fluidly connected to the inlet of the pump, and a pneumatic line made of a fusible material connected to the pneumatic valve for supplying actuation pneumatic fluid to the pneumatic valve wherein the pneumatic line passes along the longitudinal axis of the pump.

According to the invention, the pneumatic line is made of a fusible material. Therefore in case of fire near the pump, the pneumatic line will be melted by the heat resulting from the fire, the pressure inside the pneumatic line will drop and the pneumatic valve will close, stopping the flow of flammable liquefied gas to the pump. Such pumping apparatus could be described as fail safe, because in case of failure like a fire near the pump, the pumping apparatus will himself close the isolation valve without the need of any command order or any power from outside the pumping apparatus.

According to an additional feature of the invention, the pneumatic line passes at least once around the longitudinal axis of the pump. Therefore the pneumatic line will be melted by the heat resulting from fire located at any positions along the longitudinal axis of the pump.

The pneumatic line is composed of different segments connected together with connecting pieces, where the connecting pieces are cross-fitting, to allow for ease of installation of the invention on existing pumping apparatus.

The pneumatic line branches into at least one secondary pneumatic line made of a fusible material to increase the total length of pneumatic line exposed to heat in case of fire, and therefore increasing the responsiveness of the apparatus.

According to the invention, said secondary pneumatic line passes at least once around the pump longitudinal axis, so the first and secondary pneumatic lines will be more exposed to fire happening on whatsoever side of the pump.

Said secondary pneumatic line can be made of multiple segments connected by connecting pieces, where the connecting pieces can be cross-fittings to make retrofitting the invention on existing pumping apparatus easier.

### -- BRIEF DESCRIPTION OF THE DRAWINGS -

Figure 1 illustrates a pumping apparatus implemented according to an embodiment of the invention, not covered by independent claim 1, with the pneumatic line passing along the pump longitudinal axis.
Figure 2 illustrates a pumping apparatus implemented according to another embodiment of the invention, not covered by independent claim 1, with the pneumatic line passing around the pump longitudinal axis.
Figure 3 illustrates the passage of the pneumatic line around the pump body where the pneumatic line is made of several segments connected together with cross fitting.

### -- DETAILED DESCRIPTION OF THE INVENTION --

In the following, the different embodiments according to the Figures are discussed comprehensively, same reference signs indicating same or essentially same units. It is appreciated that a person skilled in the art may combine certain components of an embodiment shown in a figure with the features of the present invention as defined in the appended claims without the need to include more than this certain component or even all other components of this embodiment shown in said Figure.

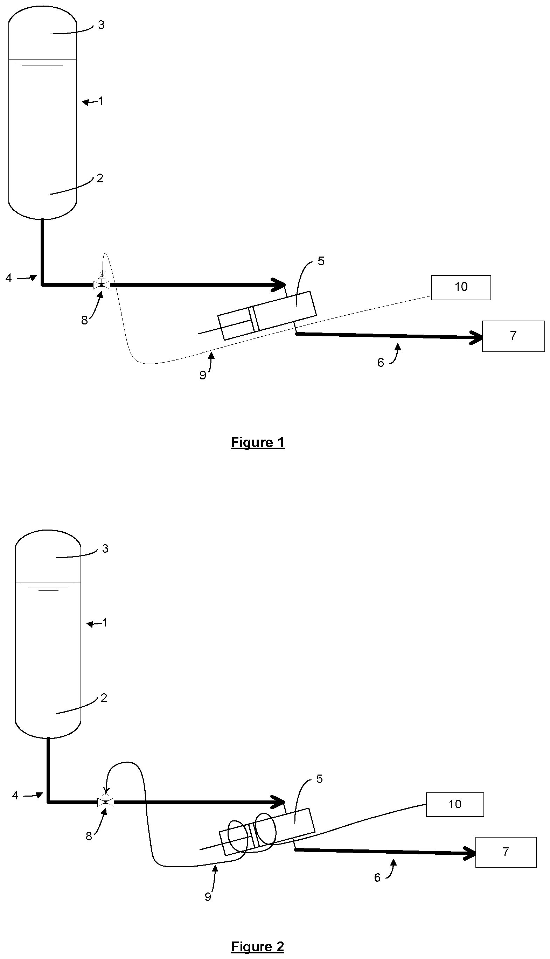

Figure 1 shows an insulated storage tank 1 adapted for containing a liquefied gas for example like liquefied oxygen, liquefied natural gas, liquefied hydrogen. Such refrigerated liquefied gases are usually stored under a pressure of a few bars and at cryogenic temperatures. Cryogenic temperatures are usually understood as temperatures below -150°C. The storage tank 1 has a bottom part 2 containing the liquefied gas and an upper part 3 where gas resulting from the evaporation of the liquefied gas is stored. A line 4 fluidly connects the bottom part 2 of the tank 1 to the inlet of a pump 5. The pump 5 is figured as a reciprocal pump, however, pump 5 can be of reciprocal type or of a rotating type or of another type. In a reciprocal pump, the pressure of the liquefied gas is increased by pushing the liquefied gas with a piston located inside a cylinder, along its longitudinal axis. In a centrifugal pump the pressure increase is realized by centrifuging the liquefied gas with an impeller. Centrifugal pumps also have a longitudinal axis, being the same as the axis of rotation of the impeller.

Another line 6 connects the outlet of the pump 5 to an usage point 7 where for example the liquefied gas can be vaporized to feed breathing apparatus if the liquefied gas is liquid oxygen, or to be supplied to a motor if the liquefied gas is for example liquid natural gas or hydrogen.

A pneumatic valve 8 is located on the line 4 between the bottom part 2 of the storage tank 1 and the inlet of the pump 5. The pneumatic valve 8 is pneumatically actuated. The pneumatic fluid for the actuation of the pneumatic valve 8 is provided through a pneumatic line 9. The pneumatic line 9 is on one end connected to the pneumatically actuated valve 8 and on another end connected to a pneumatic fluid distribution network 10. The pneumatic valve 8 is a fail closed type valve. This means that in case of a drop of the pressure inside the pneumatic line 9, a spring not shown located inside the pneumatic valve 8 will force the pneumatic valve 8 in a closed position, obstructing the line 4 and therefore fluidly disconnecting the bottom part 2 of the tank 1 and the inlet of the pump 5.

In case of emergency, to avoid further aggravation, it is usually recommended to stop the flow of liquefied gas to the usage point 7 and to confine the liquefied gas inside the liquid part 2 of the storage tank 1. 8. This will allow to fluidly isolate the pump 5 and the bottom part 2 of the storage tank 1. The result will be a containment of the liquefied gas inside the bottom part 2 of the storage tank 1. The flow of liquefied gas from the storage tank 1 to the pump 5, and from the pump 5 to the usage point 7 will be interrupted.

The pneumatic line 9 is made of a fusible material, like for example polyethylene or any another material with a melting point higher than 80°C .

If the emergency is a fire happening near the pumping apparatus, the fusible material making the pneumatic line 9 will melt because of the heat radiated by the fire, letting the pneumatic fluid escape to the outside of the pneumatic line 9. The pressure of the pneumatic fluid inside the pneumatic line 9 will decrease, triggering the closure of the pneumatically actuated valve 8 because of its fail close action type. This will allow to fluidly isolate the pump 5 and the bottom part 2 of the storage tank 1. The result will be a containment of the liquefied gas inside the bottom part 2 of the storage tank 1. The flow of liquefied gas from the storage tank 1 to the pump 5, and then from the pump 5 to the usage point 7 will be stopped.

Figure 2 shows another embodiment of the invention to increase the sensitivity of the safety apparatus to emergency case like fires. Fires can be located at various positions along the longitudinal axis of the pump 5. Therefore it appears necessary to expose the pneumatic line 9 to the multiple possible fire positions. This is achieved by the invention by providing a pneumatic line 9 passing along the longitudinal axis like in Figure 1, but additionally passing around the longitudinal axis of the pump 5. To do so the pneumatic line is "wrapped " one or several times around the longitudinal axis of pump 5. The pneumatic line 9 will then form a coil like structure around the pump 5. In case of a fire the pneumatic line 9 will then be exposed to heat radiated by fires happening on whatever side of the longitudinal axis of the pump 5, and to heat radiated by fires happening under or above the longitudinal axis of the pump 5. As already explained above, this will result is the closing of the pneumatically actuated valve 8, the confinement of the liquefied gas in the liquid part 2 of the storage tank 1, and the ending of the flow of the liquefied gas to the usage point 7.

Many refrigerated liquefied gases pumping apparatus are already installed and in operation. To facilitate the implementation of the safety feature on these existing systems it is also foreseeable to use a pneumatic line composed of multiple segments instead of only one segment. The reason being that the pumping apparatus are usually installed in industrial places already crowded by various pipes, equipments, sensors etc. During the installation of the invention on an existing pumping apparatus, it is easier to install multiple small segments than a single long one for reason of handling and accessibility. A single long segment of the pneumatic line generally has a length of a few meters to a few tens of meters depending of the relative position of the pumping apparatus and the nearest pneumatic network. Small segments could have lenghts in the range of a few tenths of meter to a few meters. Small segments could also conveniently be prefabricated and/or cut to length in a workshop and not a the industrial site, taking advantage of a cleaner and spacer workplace.

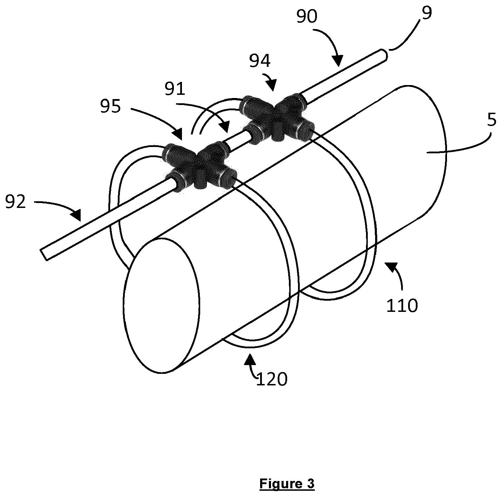

Figure 3 is a closer view of the invention showing a pump 5 for refrigerated liquefied gases with the pneumatic line 9 composed of multiples segments 90, 91, 92. Numbers of refrigerated liquefied gases pumping apparatus are already installed and in operation. To facilitate to implementation of the safety feature on theses existing systems it is also foreseeable to use a pneumatic line 9 composed of multiple segments 90, 91, 92 instead of only one segment. The reason being that the pumping apparatus are usually installed in industrial places already crowded by various pipes, equipments, sensors etc. During the installation of the invention on an existing pumping apparatus, it is easier to adjust multiple small segments 90, 91, 92 than a single long one for reason of handling and accessibility. A single long segment of the pneumatic line generally has a length of a few meters to a few tens of meters depending of the relative position of the pumping apparatus and the nearest pneumatic network. Small segments 90,91,92 could have lenghts in the range of a few tenths of meter to a few meters. Small segments 90, 91, 92 could also conveniently be prefabricated and/or cut to length in a workshop and not a the industrial installation site, taking advantage of a cleaner and spacer workplace offered by a workshop.

The multiple segments are interconnected together by connecting pieces 94, 95. One or more secondary pneumatic line 110, 120 branching from the main pneumatic line 9 is formed by connecting others small segments 110, 120 to a cross-shaped connecting piece 94, 95. The segments 110, 120 forming the secondary line 110, 120 are connected orthogonally to the main line 9. The main line 9 is them passing along a longitudinal axis of the pump 5, and one or more secondary line 110, 120 is passing around the longitudinal axis of the pump 5. As show on the figure 3, there can be one or multiple secondary lines 110,120 each one of them passing around the longitudinal axis of the pump 5, connected via cross-shaped connecting piece 94, 95 to the main pneumatic line 9 .

## Claims

1. An apparatus for pumping a fluid, comprising :
a pump (5) for pumping the fluid, the pump (5) having a longitudinal axis;
a pneumatically actuated valve (8) fluidly connected to an inlet of the pump (5) ; and
a pneumatic line (9) made of a fusible material and connected to the pneumatic valve (8) for supplying actuation pneumatic fluid to the pneumatic valve (8)
the pneumatic line (9) passes along the longitudinal axis of the pump (5) wherein the pneumatic line (9) is composed of different segments (90), (91), (92) connected together with connecting pieces (94), (95), the connecting pieces (94), (95) are cross fittings;
the pneumatic line (9) branches into at least one secondary pneumatic line (110), (120) made of a fusible material, the at least one secondary pneumatic line (110), (120) passes at least once around the pump (5) longitudinal axis, and wherein
the at least one secondary line (110), (120) is composed of multiple segments.

2. Apparatus of claim 1, wherein the pneumatic line passes at least once around the pump (5) longitudinal axis.

3. Apparatus of claim 1, wherein the multiple segments of the at least one secondary pneumatic line (110), (120) are connected together with connecting pieces (94), (95) .

4. Apparatus of claim 3, wherein the connecting pieces (94), (95) of the secondary pneumatic line (110), (120) are cross fittings.

## Patentansprüche

1. Vorrichtung zum Pumpen eines Fluids, umfassend:
eine Pumpe (5) zum Pumpen des Fluids, wobei die Pumpe (5) eine Längsachse aufweist;
ein pneumatisch betätigtes Ventil (8), das mit einem Einlass der Pumpe (5) fluidisch verbunden ist; und
eine pneumatische Leitung (9), die aus einem schmelzbaren Material gefertigt ist und mit dem pneumatischen Ventil (8) zum Versorgen des pneumatischen Ventils (8) mit pneumatischer Betätigungsflüssigkeit, verbunden ist,
wobei die pneumatische Leitung (9) entlang der Längsachse der Pumpe (5) verläuft, wobei die pneumatische Leitung (9) aus unterschiedlichen Segmenten (90), (91), (92) besteht, die durch Verbindungsstücke (94), (95) miteinander verbunden sind, wobei die Verbindungsstücke (94), (95) Kreuzstücke sind;
wobei die pneumatische Leitung (9) in mindestens eine sekundäre pneumatische Leitung (110), (120), die aus schmelzbarem Material gefertigt ist, abzweigt, wobei die mindestens eine sekundäre pneumatische Leitung (110), (120) mindestens einmal um die Längsachse der Pumpe (5) verläuft, und wobei die mindestens eine sekundäre pneumatische Leitung (110), (120) aus vielfachen Segmenten besteht.

2. Vorrichtung nach Anspruch 1, wobei die pneumatische Leitung mindestens einmal um die Längsachse der Pumpe (5) verläuft.

3. Vorrichtung nach Anspruch 1, wobei die vielfachen Segmente der mindestens einen sekundären pneumatischen Leitung (110), (120) durch Verbindungsstücke (94), (95) miteinander verbunden sind.

4. Vorrichtung nach Anspruch 3, wobei die Verbindungsstücke (94), (95) der sekundären pneumatischen Leitung (110), (120) Kreuzstücke sind.

## Revendications

1. Appareil destiné à pomper un fluide, comprenant :
une pompe (5) pour pomper le fluide, la pompe (5) ayant un axe longitudinal ;
une vanne actionné pneumatiquement (8) raccordée fluidiquement à une entrée de la pompe (5) ; et
une conduite pneumatique (9) faite d'un matériau fusible et raccordée à la vanne pneumatique (8) pour fournir un fluide pneumatique d'actionnement à la vanne pneumatique (8)
la conduite pneumatique (9) passe le long de l'axe longitudinal de la pompe (5), dans lequel la conduite pneumatique (9) est composée de différents segments (90), (91), (92) raccordés entre eux par des pièces de raccordement (94), (95), les pièces de raccordement (94), (95) sont des raccords en croix ;
la conduite pneumatique (9) se ramifie en au moins une conduite pneumatique secondaire (110), (120) faite d'un matériau fusible, l'au moins une conduite pneumatique secondaire (110), (120) passe au moins une fois autour de l'axe longitudinal de la pompe (5), et dans lequel l'au moins une conduite secondaire (110), (120) est composée de plusieurs segments.

2. Appareil selon la revendication 1, dans lequel la conduite pneumatique passe au moins une fois autour de l'axe longitudinal de la pompe (5).

3. Appareil selon la revendication 1, dans lequel les segments multiples de la conduite pneumatique secondaire au moins (110), (120) sont raccordés entre eux par des pièces de raccordement (94), (95).

4. Appareil selon la revendication 3, dans lequel les pièces de raccordement (94), (95) de la conduite pneumatique secondaire (110), (120) sont des raccords en croix.
